# EUROPÄISCHE PATENTSCHRIFT

(11) **EP 3 536 586 B1**
(45) Veröffentlichungstag und Bekanntmachung des Hinweises auf die Patenterteilung: **09.07.2025**
(21) Anmeldenummer: 18159999.4
(22) Anmeldetag: 05.03.2018
(51) Int. Cl.: B62D 25/18, B62D 25/16

(54) **NUTZFAHRZEUG MIT SPRITZSCHUTZVORRICHTUNGEN**
COMMERCIAL VEHICLE WITH SPLASH GUARD DEVICES
VÉHICULE UTILITAIRE POURVU DE DISPOSITIFS DE PROTECTION ANTI-PROJECTIONS

(43) Veröffentlichungstag der Anmeldung: 11.09.2019
(73) Patentinhaber: Schmitz Cargobull AG, 48341 Altenberge (DE)
(72) Erfinder: Tönjann, Arne, 48151 Münster (DE)
(74) Vertreter: Cohausz & Florack

(56) Entgegenhaltungen:
- US-A- 4 817 976
- US-A1- 2014 117 712
- US-B1- 7 793 985

## Beschreibung

Die Erfindung betrifft ein Nutzfahrzeug, insbesondere Kraftfahrzeug, Anhänger oder Sattelauflieger, mit wenigstens einem, insbesondere in Fahrtrichtung vorderen, Paar Räder zum Verfahren des Nutzfahrzeugs und mit wenigstens einem dem wenigstens einen Paar Räder zugeordneten Paar Spritzschutzvorrichtungen zur Verminderung von Gischt beim Befahren einer feuchten Fahrbahn, wobei sich die Spritzschutzvorrichtungen wenigstens abschnittsweise seitlich der zugehörigen Räder erstrecken und wobei die Projektionen der sich seitlich der Räder erstreckenden Abschnitte der Spritzschutzvorrichtungen in einer Richtung parallel zu den Drehachsen der zugehörigen Räder auf eine das jeweils zugeordnete Rad schneidende und parallel zum zugehörigen Rad ausgerichtete Ebene wenigstens teilweise vor und/oder wenigstens teilweise oberhalb des zugehörigen Reifens angeordnet sind.

Nutzfahrzeuge, beispielsweise in Form von Lastkraftwagen, Anhängern und Sattelaufliegern, sind insbesondere für den Transport von Gütern, vorzugsweise Stückgütern, im öffentlichen Straßenverkehr vorgesehen. Zu diesem Zweck weisen die Nutzfahrzeuge unterschiedliche Arten von Aufbauten auf, welche der Aufnahme der zu transportierenden Güter in einem Laderaum dienen. So sind beispielsweise Kofferaufbauten mit festen Seitenwänden und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport, geeignet. Die Kofferaufbauten umfassen dabei meist aus Paneelen gebildete Seitenwände und Dächer, wobei diese dann eine Kernlage aus einem geschäumten Kunststoff aufweisen können, um die Seitenwände und das Dach für einen Kühltransport thermisch hinreichend zu isolieren. Für die Kühlung ist zudem meist eine Transportkältemaschine, insbesondere an der Stirnwand, vorgesehen.

Neben Kofferaufbauten sind zudem sogenannte Planenaufbauten bekannt, bei denen die Seitenwände und das Dach durch wenigstens eine Planeneinheit verschlossen sind. Die Stirnwand ist bei Planenaufbauten wie bei Kofferaufbauten meist als feste Wand ausgebildet, während die Rückwand regelmäßig durch zwei Flügeltüren gebildet wird, um den Laderaum bedarfsweise von hinten zu beladen. Wenn eine Planeneinheit entlang der Seitenwand verschoben werden kann, spricht man auch von sogenannten Curtainsidern. Das Dach von Planenaufbauten weist typischerweise seitlich angeordnete Holmstrukturen in Form von Längsholmen auf, die unter Bildung einer Rahmenstruktur quer zum Nutzfahrzeug über Spriegel miteinander verbunden sind. Die Rahmenstruktur trägt dann die das Dach verschließende Planeneinheit, wobei die Rahmenstruktur durch Rungen getragen wird, die sich wenigstens an den Ecken des Nutzfahrzeugs befinden.

Kofferaufbauten und Planenaufbauten gemein ist, dass diese ein Chassis und eine Ladebodenstruktur aufweisen, die den Aufbau nach unten abschließen und dem Abstellen der Ladung dienen. Die Ladebodenstruktur schließt ihrerseits seitlich und gegenüberliegend durch sich längs des Nutzfahrzeugs erstreckende Längsprofilstrukturen ab. Das Chassis trägt ein Fahrwerk mit wenigstens einem Paar Räder, die ebenfalls auf gegenüberliegenden Seiten des Nutzfahrzeugs angeordnet sind. Oft sind auch mehrere Paar Räder hintereinander am Chassis vorgesehen.

Um die beim Befahren feuchter oder nasser Fahrbahnen entstehende Gischt gering zu halten und so die Sicht für den nachfolgenden Verkehr zu verbessern, weisen die Chassis wenigstens einem Paar Räder zugeordnet Spritzschutzvorrichtungen auf. Diese sind wenigstens über die gesamte Breite der jeweiligen Räder vorgesehen und erstrecken sich zudem bis in einen äußeren Bereich seitlich neben den Rädern. Werden Projektionen der sich seitlich der Räder erstreckenden Abschnitte der Spritzschutzvorrichtungen in einer Richtung parallel zu den Drehachsen der zugehörigen Räder auf eine das jeweils zugeordnete Rad schneidende und parallel zum zugehörigen Rad ausgerichtete Ebene erzeugt, sind die Projektionen der sich seitlich der Räder erstreckenden Abschnitte der Spritzschutzvorrichtungen abschnittsweise wenigstens teilweise vor und/oder wenigstens teilweise oberhalb des zugehörigen Rads angeordnet. Entsprechende Nutzfahrzeuge sind beispielsweise aus der US 4 817 976 A bekannt.

Dabei besteht grundsätzlich ein Zielkonflikt dahingehend, dass ein möglichst effektiver Spritzschutz mit möglichst geringem Aufwand, also mit einer hohen Effizienz, erreicht werden soll. Grundsätzlich gilt, dass je mehr die Räder durch den Spritzschutz umgeben werden, desto mehr verspritzte Feuchtigkeit abgefangen und abgeleitet werden kann. Dies erhöht jedoch den Materialeinsatz, den konstruktiven Aufwand und den Montageaufwand, was letztlich zu erhöhten Kosten für den Spritzschutz führt.

Daher liegt der vorliegenden Erfindung die Aufgabe zugrunde, das eingangs genannte und zuvor näher erläuterte Nutzfahrzeug derart auszugestalten und weiterzubilden, dass ein effizienterer Spritzschutz möglich wird.

Diese Aufgabe wird durch ein Nutzfahrzeug nach Anspruch 1 gelöst.

Die Erfindung hat folglich erkannt, dass in Fahrtrichtung vor dem wenigstens einen Paar Räder wenigstens in Teilen auf einen Spritzschutz verzichtet werden kann, wenn seitlich der Räder Spritzschutzvorrichtungsabschnitte vorgesehen sind, die sich projiziert in einer Richtung parallel zu den Drehachsen der zugehörigen Räder auf eine das jeweils zugeordnete Rad schneidende und parallel zum zugehörigen Rad ausgerichtete Ebene vor und/oder oberhalb der Räder angeordnet sind. In diesem Zusammenhang bedeutet vor dem Rad nicht zwingend vor dem gesamten Rad, sondern lediglich auf der Höhe des Spritzschutzvorrichtungsabschnitts vor dem Rad. Gleichfalls bedeutet in diesem Zusammenhang oberhalb des Rads nicht oberhalb des gesamten Rads, sondern lediglich am Ort des Spritzschutzvorrichtungsabschnitts oberhalb des Rads.

Sind die Spritzschutzvorrichtungen in diesen Bereichen seitlich der zugehörigen Räder vorgesehen, kann das Heraustreten von verspritzter Feuchtigkeit nach außen und damit die Entstehung von Gischt in so hohem Maße unterbunden werden, dass im Gegenzug wenigstens auf einen Teil der in Fahrtrichtung vor den Rädern und nicht seitlich dazu vorgesehenen Spritzschutzvorrichtungen verzichtet werden kann. Zudem können von der Fahrbahn aufgewirbelte Partikel, wie etwa Schmutz, Rollsplit oder Steine, von den Spritzschutzvorrichtungen zurückgehalten werden. Es handelt sich dabei jeweils um den Teil vor der jeweils inneren Hälfte der Räder. Es ist also grundsätzlich ausreichend, wenn sich die Spritzschutzvorrichtungen jeweils von außen nur über die Hälfte der Breite der jeweils zugehörigen Räder vor den Rädern erstrecken. Die Spritzschutzvorrichtungen können sich also wenigstens angrenzend zu den sich seitlich der Räder erstreckenden Abschnitten der Spritzschutzvorrichtungen erstrecken. So kann ein seitliches Herausspritzen von Feuchtigkeit unter Bildung von Gischt und/oder ein seitliches Austragen von aufgewirbelten Partikeln effektiv verringert werden, was insbesondere für den Fall gilt, dass die vor den jeweils zugehörigen Rädern angeordneten Abschnitte der Spritzschutzvorrichtungen mit den jeweils seitlich der zugehörigen Räder angeordneten Abschnitten der Spritzschutzvorrichtungen, insbesondere spaltfrei, verbunden sind.

Alternativ oder zusätzlich kann es zu einem effizienteren Spritzschutz führen, wenn die Projektionen der sich seitlich der Räder erstreckenden Abschnitte der Spritzschutzvorrichtungen in einer Richtung parallel zu den Drehachsen der zugehörigen Räder auf eine das jeweils zugeordnete Rad schneidende und parallel zum zugehörigen Rad ausgerichtete Ebene wenigstens teilweise sowohl vor als auch oberhalb des Rads bzw. des angrenzenden Radabschnitts angeordnet sind. Auch hier bedeutet vor dem Rad nicht zwingend vor dem gesamten Rad, sondern lediglich auf der Höhe des Spritzschutzvorrichtungsabschnitts vor dem Rad und oberhalb des Rads nicht zwingend oberhalb des gesamten Rads, sondern lediglich an Ort des Spritzschutzvorrichtungsabschnitts oberhalb des Rads. Im Ergebnis befinden sich die Projektion der seitlich neben den Rädern angeordneten Abschnitte der Spritzschutzvorrichtungen wenigstens teilweise in einem Bereich zwischen dem vorderen oberen Viertel des Rads und dem Rand eines Quadrats, dessen Seitenlänge dem Durchmesser des Rads entsprechen und dessen Seiten horizontal und vertikal ausgerichtet sind und jeweils an einem Punkt am Rad anliegen.

In diesem Zusammenhang wird darauf hingewiesen, dass die Ausrichtung des Nutzfahrzeugs abhängig ist von der Neigung des Untergrunds, auf dem das Nutzfahrzeug steht. Der besseren Verständlichkeit halber und zur Vermeidung unnötiger Wiederholungen wird vorliegend jedoch vereinfachend davon ausgegangen, dass das Nutzfahrzeug auf einem ebenen und horizontalen Untergrund steht und/oder die Ladebodenstruktur parallel zur Horizontalen ausgerichtet ist.

Bei einer ersten besonders bevorzugten Ausgestaltung des Nutzfahrzeugs erstrecken sich die Spritzschutzvorrichtungen gegen die Fahrtrichtung gesehen von außen höchstens bis über ein Viertel der Breite des wenigstens einen Rads. Es ist in diesem Zusammenhang effektiver, die seitlich der Räder vorgesehenen Abschnitte der Spritzschutzvorrichtungen so zu vergrößern und/oder anzuordnen, dass vor den Rädern auf weitere Teile der Spritzschutzvorrichtungen verzichtet werden kann. So lässt sich der Materialeinsatz, der konstruktive Aufwand und/oder der Montageaufwand insgesamt verringern. Dies gilt insbesondere für den Fall, dass sich die Spritzschutzvorrichtungen wenigstens im Wesentlichen ausschließlich seitlich der zugehörigen Räder erstrecken. Die vorliegende Einschränkung wenigstens im Wesentlichen ausschließlich soll dabei zum Ausdruck bringen, dass von der technischen Lehre der Erfindung auch solche Spritzschutzvorrichtungen umfasst sein sollen, die sich lediglich minimal also nicht in einem wesentlichen Umfang bis vor die zugehörigen Räder erstrecken.

In diesem Zusammenhang ist es dann zur Verringerung der Kosten und des konstruktiven Aufwands besonders bevorzugt, wenn ein größerer Bereich vor den Rädern des wenigstens einen Paars von Rädern frei bleibt, in dem Sinne dass in diesem Bereich vor den Rädern auch keine anderen Elemente im Sinne von Spritzschutzelementen vorgesehen sind, die dem Spritzschutz dienen, um dem eigentlichen, zuvor beschriebenen Vorteil nicht entgegenzuwirken. Der entsprechende Bereich erstreckt sich dabei vorzugsweise in der Fahrtrichtung gesehen 25 cm, vorzugsweise 50 cm, weiter vorzugsweise 75 cm, insbesondere 100 cm vor dem jeweils der Spritzschutzvorrichtung zugeordneten gesamten Rad.

Mit dem Begriff des gesamten Rads ist gemeint, dass der Abstand mit Bezug auf das vordere Ende des Rads zu bestimmen ist. Grundsätzlich ist dabei ein größerer Abstand bevorzugt. Andererseits kann die Größe des Abstands die Ausrüstung des Nutzfahrzeugs einschränken, insbesondere mit Einrichtungen, die neben dem Spritzschutz noch einem anderen Zweck dienen.

Die Projektionen der sich seitlich der Räder erstreckenden Abschnitte der Spritzschutzvorrichtungen in einer Richtung parallel zu den Drehachsen der zugehörigen Räder auf eine das jeweils zugeordnete Rad schneidende und parallel zum zugehörigen Rad ausgerichtete Ebene können wenigstens teilweise bis auf 95%, vorzugsweise bis auf 90%, weiter vorzugsweise bis auf 85%, insbesondere bis auf 80 % der Höhe des zugehörigen Reifens herunterreichen. Dies führt zu einem guten Kompromiss zwischen Spritzschutzeigenschaften und konstruktivem Aufwand für die Spritzschutzvorrichtungen. Je weiter die Spritzschutzvorrichtungen herunterreichen, desto effektiver ist der Spritzschutz, aber die Zunahme der Effektivität sinkt dabei immer mehr und erfordert einen immer höheren Material- und Konstruktionsaufwand. Insbesondere ist es für den Spritzschutz zweckmäßig, wenn die Spritzschutzvorrichtung gleichzeitig bis mindestens zur Oberkante des Rades, insbesondere deutlich darüber hinaus reicht.

Alternativ oder zusätzlich können die Projektionen der sich seitlich der Räder erstreckenden Abschnitte der Spritzschutzvorrichtungen in einer Richtung parallel zu den Drehachsen der zugehörigen Räder auf eine das jeweils zugeordnete Rad schneidende und parallel zum zugehörigen Rad ausgerichtete Ebene auch wenigstens teilweise oberhalb einer sich vom Radmittelpunkt in einem Winkel von 25°, vorzugsweise von 35°, insbesondere von 45° in Fahrtrichtung nach vorne oben erstreckenden Referenzlinie angeordnet sein. In diesem Bereich kann ein besonders effektiver Spritzschutz erreicht werden. Dabei ist es grundsätzlich für einen effektiven Spritzschutz bevorzugt, wenn die Spritzschutzvorrichtungen jeweils wenigstens bis an die jeweilige Referenzlinie heranreichen.

Unabhängig davon wird der Spritzschutz auch dadurch effektiver gestaltet, dass die Projektionen der sich seitlich der Räder erstreckenden Abschnitte der Spritzschutzvorrichtungen in einer Richtung parallel zu den Drehachsen der zugehörigen Räder auf eine das jeweils zugeordnete Rad schneidende und parallel zum zugehörigen Rad ausgerichtete Ebene von einer vertikalen Ebene durch den Radmittelpunkt um weniger als 10%, insbesondere weniger als 5% des Raddurchmessers in Fahrtrichtung nach vorne beabstandet sind.

Um Material einzusparen und den konstruktiven Aufwand zu verringern, enden die Spritzschutzvorrichtungen in Fahrtrichtung gänzlich hinter einer vertikalen Ebene, die in einem Abstand von 20%, insbesondere von 10% des Raddurchmessers vor dem gesamten Rad angeordnet ist. Besonders effektiv ist es dabei, wenn die Spritzschutzvorrichtungen in Fahrtrichtung gänzlich hinter dem vorderen Rand jeweils des gesamten zugeordneten Rads enden.

Für den Spritzschutz ist es zudem grundsätzlich günstig, wenn die Spritzschutzvorrichtungen wenigstens abschnittsweise oberhalb des jeweils zugehörigen Rads eine vertikale Erstreckung zwischen 30 mm und 50 mm und/oder zwischen 45 mm und 65 mm und/oder zwischen 60 mm und 80 mm und/oder zwischen 75 mm und 100 mm insbesondere wenigstens im Wesentlichen 60 mm aufweisen.

Bevorzugt ist eine nach außen durch Längsprofilstrukturen abgeschlossene Ladebodenstruktur vorgesehen, wobei die Längsprofilstrukturen ebenfalls effektiv in den Spritzschutz eingebunden werden können, wenn die Längsprofilstrukturen wenigstens abschnittsweise im Bereich oberhalb des Rads gegenüber der Ladebodenstruktur einen seitlichen Hinterschnitt bilden. Dieser kann dann von innen angetragene Feuchtigkeit abfangen und ableiten. Dies ist in besonders effizienter Weise möglich, wenn die Längsprofilstrukturen im Bereich des seitlichen Hinterschnitts wenigstens abschnittsweise zwischen 20 mm und 70 mm, vorzugsweise zwischen 30 mm und 60 mm, insbesondere zwischen 40 mm und 50 mm nach unten vorstehen.

Konstruktiv einfach und zugleich für den Spritzschutz bevorzugt sind die Spritzschutzvorrichtungen an einer Ladebodenstruktur nach außen abschließenden Längsprofilstrukturen festgelegt und stehen gegenüber den Längsprofilstrukturen nach unten vor. Alternativ oder zusätzlich bietet es sich aus demselben Grunde an, wenn die Spritzschutzvorrichtungen, insbesondere außerhalb eines Montageabschnitts mit den Längsprofilstrukturen, wenigstens im Wesentlichen flächig ausgebildet sind.

Eine materialsparende und doch effektive Weise der Ausbildung von Spritzschutzvorrichtungen kann es sein, wenn die Spritzschutzvorrichtungen wenigstens im Wesentlichen dreieckig ausgebildet sind und/oder eine nach unten weisende Spitze aufweisen. Dabei ist es der Effizienz weiter zuträglich, wenn die Spitze wenigstens im Wesentlichen an in Fahrtrichtung vorderen Enden der jeweiligen Spritzschutzvorrichtungen vorgesehen sind.

Weist das Nutzfahrzeug mehrere Paar von Rädern auf, dann kann es ausreichend sein, wenn das eine Paar Räder ein in Fahrtrichtung vorderes Paar Räder ist. Dies gilt dabei insbesondere für den Fall, dass der Abstand der Räderpaare in Fahrtrichtung weniger als 50 cm, vorzugsweise weniger als 50 cm, weiter vorzugsweise weniger als 40 cm, insbesondere weniger als 30 cm, beträgt.

Des Weiteren kann es sich bei den Rädern des wenigstens einen Paares von Rädern jeweils um solche mit einer Zwillingsbereifung handeln. Die Breite der Räder ist dann also nicht auf die Breite eines Reifens der Zwillingsbereifung zu beziehen, sondern auf die Breite der jeweiligen Zwillingsbereifung insgesamt.

Nachfolgend wird die Erfindung anhand einer lediglich ein Ausführungsbeispiel darstellenden Zeichnung näher erläutert. In der Zeichnung zeigt
- Fig. 1: ein erfindungsgemäßes Nutzfahrzeug in einer perspektivischen Darstellung,
- Fig. 2: ein Detail des Nutzfahrzeugs aus Fig. 1 im Bereich des Fahrgestells in einer Seitenansicht,
- Fig. 3A-B: das Detail der Fig. 2 in einer Schnittansicht entlang einer vertikalen Schnittebene quer zum Nutzfahrzeug und in einer perspektivischen Ansicht von unten,
- Fig. 4: eine Spritzschutzvorrichtung des Nutzfahrzeugs aus Fig. 1 in einer perspektivischen Ansicht und
- Fig. 5: eine Projektion einer Spritzschutzvorrichtung auf eine das zugeordnete Rad schneidende und parallel zum zugehörigen Rad ausgerichtete Schnittebene in einer schematischen Darstellung.

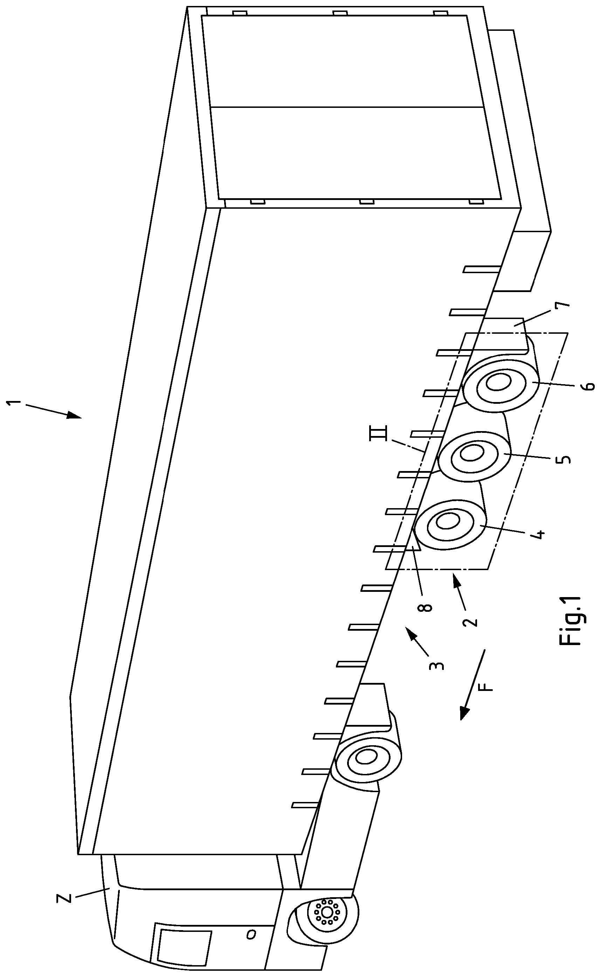

In der Fig. 1 ist ein erfindungsgemäßes Nutzfahrzeug 1 in Form eines Sattelaufliegers mit einem Planenaufbau nach Art eines Curtainsiders dargestellt, der von einer Zugmaschine Z gezogen wird. Das Nutzfahrzeug 1 weist ein Fahrgestell 2 als Teil des Chassis 3 des Nutzfahrzeugs 1 auf, wobei das Fahrgestell 2 drei hintereinander und benachbart zueinander angeordnete Paare von Rädern 4,5,6 umfasst. Dabei sind in Fahrtrichtung F gesehen hinter den Rädern 6 des letzten Paars Räder 6 jeweils Radabdeckungen 7 vorgesehen, die dem Spritzschutz dienen, wenn das Nutzfahrzeug 1 über feuchte oder gar nasse Fahrbahnen fährt. Der Spritzschutz dient der Verringerung der durch das Nutzfahrzeug 1 erzeugten Gischt sowie, bedarfsweise, dem Zurückhalten von aufgewirbelten Partikeln, wie etwa Schmutz, Rollsplit oder Steinen. Vor den Rädern 4 des vorderen Paars Räder 4 ist jeweils eine Spritzschutzvorrichtung 8 vorgesehen, die demselben Zweck dient. Das von dem Fahrgestell 2 verspritzte Wasser soll durch die Spritzschutzvorrichtungen 8 und die Radabdeckungen 7 aufgefangen und abgeleitet werden, ohne dass das Wasser zu sehr nach hinten oder zur Seite spritzt.

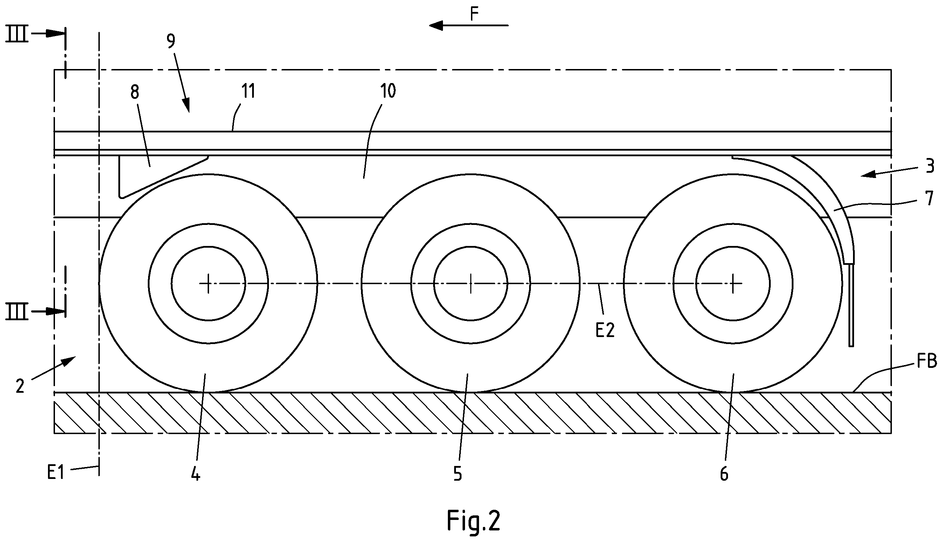

In der Fig. 2 ist das Chassis 3 des Nutzfahrzeugs im Bereich des Fahrgestells 2 im Detail dargestellt, wobei das Chassis 3 eine Ladebodenstruktur 9 trägt, auf der die Ladung abgestellt werden kann. Der besseren Übersichtlichkeit halber ist das Nutzfahrzeug 1 in der Fig. 2 ohne Seitenplane dargestellt. Das Chassis 3 umfasst parallele Längsträger 10, an denen das Fahrgestell 2 montiert ist. Hinter den in Fahrtrichtung F hinteren Rädern 6 befinden sich jeweils die Radabdeckungen 7. Vor den in Fahrtrichtung F vorderen Rädern 4 befinden sich jeweils die Spritzschutzvorrichtungen 8, und zwar jeweils auf Höhe der entsprechenden Abschnitte der Spritzschutzvorrichtungen 8. Die Spritzschutzvorrichtungen insgesamt sind in Fahrtrichtung gänzlich hinter einer vertikalen Ebene E1 angeordnet, die sich auf Höhe des vorderen Rands des zugehörigen Rads 4 befindet. Anders ausgedrückt erstrecken sich die Spritzschutzvorrichtungen 8 seitlich der zugehörigen Räder 4 nicht bis vor das gesamte jeweils zugehörige Rad 4. Auch sind vor den entsprechenden Rädern 4 keine weiteren Spritzschutzelemente vorgesehen, jedenfalls in einem Abstand zum vorderen Rand des jeweils vorderen Rads 4 von wenigstens 50 cm, insbesondere wenigstens 75 cm, und zwar über die gesamte Höhe und Breite B des jeweiligen der Spritzschutzvorrichtung 8 zugeordneten Rads 4.

Die Räder 4,5,6 stehen auf einer ebenen und horizontalen Fahrbahn FB, so dass die Ladebodenstruktur 9 bzw. der Ladeboden 11 als horizontal ausgerichtet angesehen werden kann. Mithin liegen auch die Achsen der Räder 4,5,6 auf einer gemeinsamen, horizontalen Ebene E2. Zudem kann vor diesem Hintergrund eine Richtung senkrecht zur Ladebodenstruktur 9 bzw. zum Ladeboden 11 als vertikal ausgerichtet angesehen werden.

Das Chassis 3, das Fahrgestell 2 und die Paare von Rädern 4,5,6 sind vorliegend nur von einer Seite des Nutzfahrzeugs 1 dargestellt. An der gegenüberliegenden Seite des Nutzfahrzeugs 1 sind Chassis 3, Fahrgestell 2 und die Paare von Rädern 4,5,6 wenigstens im Westlichen analog, insbesondere spiegelbildlich, vorgesehen. Die Darstellung des Nutzfahrzeugs 1 von beiden Seiten kann daher unterbleiben, ohne dass dies zu Lasten der Verständlichkeit geht.

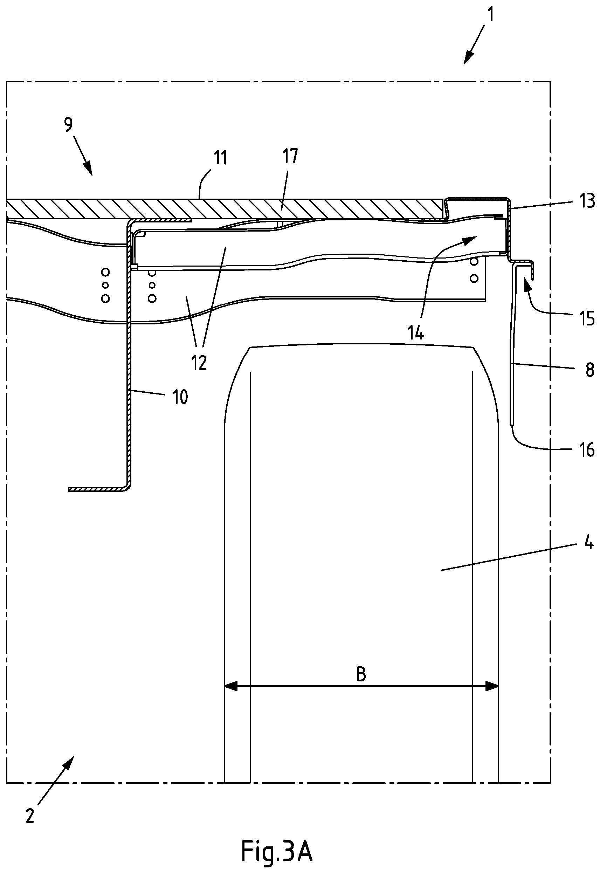

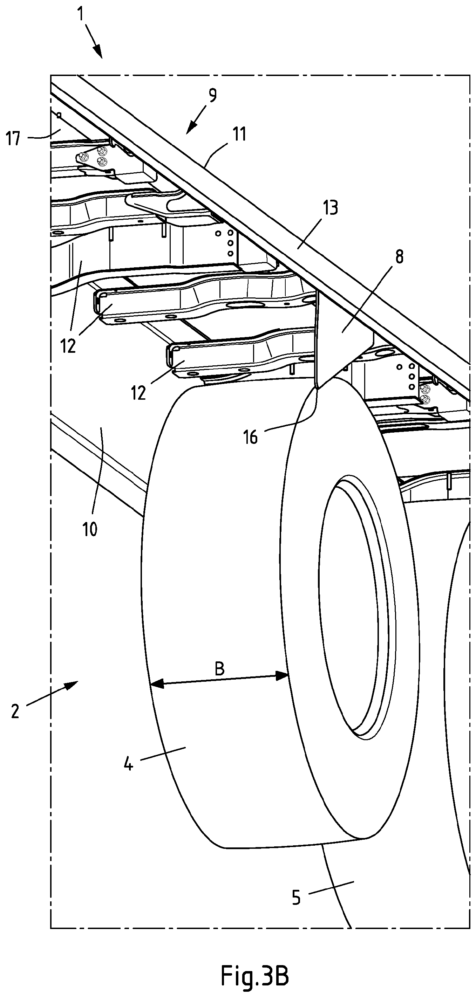

In den Fig. 3A-B ist ein Detail des Nutzfahrzeugs 1, insbesondere des Fahrgestells 2, in einer Schnittansicht von vorne und in einer perspektivischen Ansicht von unten dargestellt. Ferner ist die Breite B der Räder 4 dargestellt. Die Darstellung ist jedoch der besseren Verständlichkeit halber vereinfacht worden, indem die Radaufhängungen weggelassen worden sind, die an den Längsträgern 10 festgelegt sind. Die Längsträger 10 tragen die Ladebodenstruktur 9, an der Querträger 12 zur Aussteifung der Ladebodenstruktur 9 vorgesehen sind, aber nicht vorgesehen sein müssen. Der eigentliche Ladeboden 11 der Ladebodenstruktur 9 wird durch eine Decklage 17 gebildet, auf der die zu transportierenden Güter angestellt werden können. Zu den Seiten wird die Ladebodenstruktur 9 durch Längsprofilstrukturen 13 begrenzt, an denen die Spritzschutzvorrichtungen 8 montiert sind. Die Längsprofilstrukturen 13 sind so ausgebildet, dass sie im Bereich oberhalb des Rads 4 gegenüber der Ladebodenstruktur 9 einen seitlichen Hinterschnitt 14 bilden. Dieser Hinterschnitt 14 ist dabei so ausgebildet, dass der Hinterschnitt 14 eine vertikale Erstreckung zwischen 30 mm und 60 mm aufweist.

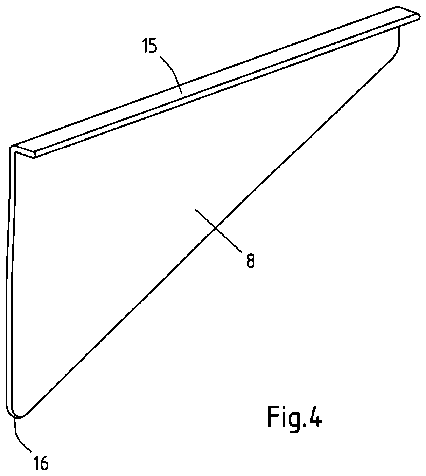

Die Spritzschutzvorrichtungen 8 weisen zur Montage an den Längsprofilstrukturen 13 obere Montageabschnitte 15 auf. Darunter sind die Spritzschutzvorrichtungen 8 wenigstens im Wesentlichen dreieckig und flächig ausgebildet. Dabei sind die Spritzschutzvorrichtungen 8 gänzlich seitlich neben den zugehörigen Rädern 4 des vorderen Paars Räder 4 angeordnet. Die Spritzschutzvorrichtungen 8 erstrecken sich nicht bis vor die zugehörigen Räder 4, jedoch oberhalb des jeweils zugehörigen Rads 4 jeweils abschnittsweise mit einer vertikalen Erstreckung zwischen 30 mm und 50 mm, zwischen 45 mm und 65 mm und zwischen 60 mm und 80 mm. Die nach unten weisenden Spitzen 16 der Spritzschutzvorrichtungen 8 sind an unteren freien Enden der Spritzschutzvorrichtungen 8 vorgesehen. Hierzu wird auch auf die eine Spritzschutzvorrichtung 8 separat darstellende Fig. 4 verwiesen.

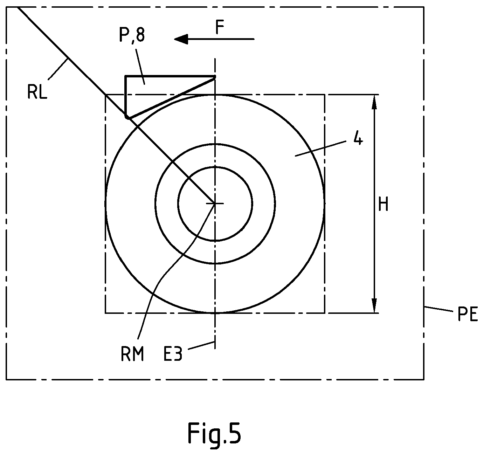

In der Fig. 5 ist eine Projektion P einer Spritzschutzvorrichtung 8 auf eine das zugeordnete Rad 4 schneidende und parallel zum zugehörigen Rad 4 ausgerichtete Projektionsebene PE schematisch dargestellt. Die Projektion P der dargestellten und insoweit bevorzugten Spritzschutzvorrichtung 8 ist wenigstens teilweise bis auf 90%, vorzugsweise bis auf 85%, der Höhe H des zugehörigen Reifens 4 heruntergezogen. Zudem ist die Projektion P der Spritzschutzvorrichtung 8 wenigstens teilweise oberhalb einer sich vom Radmittelpunkt RM in einem Winkel von 35°, insbesondere von 45°, in Fahrtrichtung nach vorne oben erstreckenden Referenzlinie RL angeordnet und reicht wenigstens abschnittsweise bis an die Referenzlinien RL heran. Im Übrigen ist die dargestellte und insoweit bevorzugte Projektion P der Spritzschutzvorrichtung 8 von einer vertikalen Ebene E3 durch den Radmittelpunkt um weniger als 5% des Raddurchmessers in Fahrtrichtung nach vorne beabstandet.

### Bezugszeichenliste

- 1: Nutzfahrzeug
- 2: Fahrgestell
- 3: Chassis
- 4: vorderes Paar Räder
- 5: mittleres Paar Räder
- 6: hinteres Paar Räder
- 7: Radabdeckung
- 8: Spritzschutzvorrichtung
- 9: Ladebodenstruktur
- 10: Längsträger
- 11: Ladeboden
- 12: Querträger
- 13: Längsprofilstruktur
- 14: Hinterschnitt
- 15: Montageabschnitt
- 16: Spitze
- 17: Decklage

- B: Breite
- E1-3: Ebene
- F: Fahrtrichtung
- H: Höhe
- P: Projektion
- PE: Projektionsebene
- RL: Referenzlinie
- RM: Radmittelpunkt

## Patentansprüche

1. Nutzfahrzeug (1), insbesondere Kraftfahrzeug, Anhänger oder Sattelauflieger, mit wenigstens einem, insbesondere in Fahrtrichtung (F) vorderen, Paar Räder (4) zum Verfahren des Nutzfahrzeugs (1) und mit wenigstens einem dem wenigstens einen Paar Räder (4) zugeordneten Paar Spritzschutzvorrichtungen (8) zur Verminderung von Gischt beim Befahren einer feuchten Fahrbahn (FB), wobei sich die Spritzschutzvorrichtungen (8) wenigstens abschnittsweise seitlich der zugehörigen Räder (4) erstrecken und wobei die Projektionen (P) der sich seitlich der Räder (4) erstreckenden Abschnitte der Spritzschutzvorrichtungen (8) in einer Richtung parallel zu den Drehachsen der zugehörigen Räder (4) auf eine das jeweils zugeordnete Rad (4) schneidende und parallel zum zugehörigen Rad (4) ausgerichtete Ebene (PE) wenigstens teilweise vor und/oder wenigstens teilweise oberhalb des Rads (4) angeordnet sind, wobei sich die Spritzschutzvorrichtungen (8) gegen die Fahrtrichtung (F) gesehen von außen höchstens bis über die halbe Breite (B) des wenigstens einen Rads (4) erstrecken und wobei die Spritzschutzvorrichtungen (8) in Fahrtrichtung gänzlich hinter einer vertikalen Ebene (E1) enden und dass die vertikale Ebene (E1) in einem Abstand von 20% des Raddurchmessers (RM) vor dem gesamten Rad (4) angeordnet ist,
**dadurch gekennzeichnet, dass**
die Projektionen (P) der sich seitlich der Räder (4) erstreckenden Abschnitte der Spritzschutzvorrichtungen (8) in einer Richtung parallel zu den Drehachsen der zugehörigen Räder (4) auf eine das jeweils zugeordnete Rad (4) schneidende und parallel zum zugehörigen Rad (4) ausgerichtete Ebene (PE) von einer vertikalen Ebene (E3) durch den Radmittelpunkt (RM) um weniger als 10% des Raddurchmessers bzw. der Höhe (H) des Rads (4) in Fahrtrichtung (F) nach vorne beabstandet sind.

2. Nutzfahrzeug nach Anspruch 1,
**dadurch gekennzeichnet, dass**
sich die Spritzschutzvorrichtungen (8) gegen die Fahrtrichtung (F) gesehen von außen höchstens bis über ein Viertel der Breite (B) des wenigstens einen Rads (4) erstrecken und dass, vorzugsweise, sich die Spritzschutzvorrichtungen (8) ausschließlich seitlich der zugehörigen Räder (4) erstrecken.

3. Nutzfahrzeug nach Anspruch 2,
**dadurch gekennzeichnet, dass**
ein sich in Fahrtrichtung (F) 25 cm, vorzugsweise 50 cm, weiter vorzugsweise 75 cm, insbesondere 100 cm vor dem jeweils der Spritzschutzvorrichtung (8) zugeordneten gesamten Rad (4) und sich bis über die Höhe (H) und die Breite (B) des jeweils der Spritzschutzvorrichtung (8) zugeordneten Rads (4) erstreckender Bereich wenigstens im Wesentlichen frei von Spritzschutzelementen ist.

4. Nutzfahrzeug nach einem der Ansprüche 1 bis 3,
**dadurch gekennzeichnet, dass**
die Projektionen (P) der sich seitlich der Räder (4) erstreckenden Abschnitte der Spritzschutzvorrichtungen (8) in einer Richtung parallel zu den Drehachsen der zugehörigen Räder (4) auf eine das jeweils zugeordnete Rad (4) schneidende und parallel zum zugehörigen Rad (4) ausgerichtete Ebene (PE) wenigstens teilweise bis auf 95%, vorzugsweise bis auf 90%, weiter vorzugsweise bis auf 85%, insbesondere bis auf 80 % der Höhe (H) des zugehörigen Rads (4) herunterreichen.

5. Nutzfahrzeug nach einem der Ansprüche 1 bis 4,
**dadurch gekennzeichnet, dass**
die Projektionen (P) der sich seitlich der Räder (4) erstreckenden Abschnitte der Spritzschutzvorrichtungen (8) in einer Richtung parallel zu den Drehachsen der zugehörigen Räder (4) auf eine das jeweils zugeordnete Rad (4) schneidende und parallel zum zugehörigen Rad (4) ausgerichtete Ebene (PE) wenigstens teilweise oberhalb einer sich vom Radmittelpunkt (RM) in einem Winkel von 25°, vorzugsweise von 35°, insbesondere von 45° in Fahrtrichtung (F) nach vorne oben erstreckenden Referenzlinie (RL) angeordnet sind und dass, vorzugsweise, die Spritzschutzvorrichtungen (8) wenigstens bis an die Referenzlinien (RL) heranreichen.

6. Nutzfahrzeug nach einem der Ansprüche 1,
**dadurch gekennzeichnet, dass**
die Projektionen (P) der sich seitlich der Räder (4) erstreckenden Abschnitte der Spritzschutzvorrichtungen (8) in einer Richtung parallel zu den Drehachsen der zugehörigen Räder (4) auf eine das jeweils zugeordnete Rad (4) schneidende und parallel zum zugehörigen Rad (4) ausgerichtete Ebene (PM) von einer vertikalen Ebene (E3) durch den Radmittelpunkt (RM) um weniger als 5% des Raddurchmessers bzw. der Höhe (H) des Rads (4) in Fahrtrichtung (F) nach vorne beabstandet sind.

7. Nutzfahrzeug nach einem der Ansprüche 1,
**dadurch gekennzeichnet, dass**
die Spritzschutzvorrichtungen (8) in Fahrtrichtung gänzlich hinter einer vertikalen Ebene (E3) enden und dass die vertikale Ebene (E3) in einem Abstand von 10% des Raddurchmessers (RM) vor dem gesamten Rad (4) angeordnet ist und dass, vorzugsweise, die Spritzschutzvorrichtungen (8) in Fahrtrichtung (F) gänzlich hinter dem vorderen Rand (4) des jeweils zugeordneten Rads (4) enden.

8. Nutzfahrzeug nach einem der Ansprüche 1 bis 7,
**dadurch gekennzeichnet, dass**
die Spritzschutzvorrichtungen (8) wenigstens abschnittsweise oberhalb des jeweils zugehörigen Rads (4) eine vertikale Erstreckung zwischen 30 mm und 50 mm und/oder zwischen 45 mm und 65 mm und/oder zwischen 60 mm und 80 mm und/oder zwischen 75 mm und 100 mm aufweist, insbesondere wenigstens im Wesentlichen 60 mm aufweist.

9. Nutzfahrzeug nach einem der Ansprüche 1 bis 8,
**dadurch gekennzeichnet, dass**
eine nach außen durch Längsprofilstrukturen (13) abgeschlossene Ladebodenstruktur (9) vorgesehen ist, dass die Längsprofilstrukturen (13) wenigstens abschnittsweise im Bereich oberhalb des Rads (4) gegenüber der Ladebodenstruktur (9) seitliche Hinterschnitte (14) bilden und dass, vorzugsweise, die Hinterschnitte (14) wenigstens abschnittsweise eine vertikale Erstreckung zwischen 20 mm und 70 mm, vorzugsweise zwischen 30 mm und 60 mm, insbesondere zwischen 40 mm und 50 mm aufweist.

10. Nutzfahrzeug nach einem der Ansprüche 1 bis 9,
**dadurch gekennzeichnet, dass**
eine nach außen durch Längsprofilstrukturen (13) abgeschlossene Ladebodenstruktur (9) vorgesehen ist, dass die Spritzschutzvorrichtungen (8) an den zugehörigen Längsprofilstrukturen (13) festgelegt sind und gegenüber den Längsprofilstrukturen (13) nach unten vorstehen und/oder dass die Spritzschutzvorrichtungen (8), insbesondere außerhalb eines Montageabschnitts (15) mit den Längsprofilstrukturen (13), wenigstens im Wesentlichen flächig ausgebildet sind.

11. Nutzfahrzeug nach einem der Ansprüche 1 bis 10,
**dadurch gekennzeichnet, dass**
die Spritzschutzvorrichtungen (8) wenigstens im Wesentlichen dreieckig ausgebildet sind und/oder eine nach unten weisende Spitze (16) aufweisen und dass, vorzugsweise, die Spitze (16) wenigstens im Wesentlichen am in Fahrtrichtung (F) vorderen Ende der jeweiligen Spritzschutzvorrichtung (8) vorgesehen ist.

12. Nutzfahrzeug nach einem der Ansprüche 1 bis 11,
**dadurch gekennzeichnet, dass**
das eine Paar Räder (4) ein in Fahrtrichtung vorderes Paar Räder (4) von mehreren hintereinander angeordneten Paaren Rädern (4,5,6) ist und dass, vorzugsweise, der Abstand der Paare Räder (4,5,6) in Fahrtrichtung (F) weniger als 50 cm, vorzugsweise weniger als 35 cm, weiter vorzugsweise weniger als 25 cm, insbesondere weniger als 15 cm, beträgt.

13. Nutzfahrzeug nach einem der Ansprüche 1 bis 12,
**dadurch gekennzeichnet, dass**
die Räder des wenigstens einen Paares von Rädern jeweils eine Zwillingsbereifung aufweisen.

## Claims

1. Utility vehicle (1), in particular motor vehicle, trailer or semitrailer, with at least one, in particular frontal in the direction of travel (F), pair of wheels (4) for moving the utility vehicle (1) and with at least one pair of spray protection devices (8), associated to the at least one pair of wheels (4), for reducing spray when driving on a moist roadway (FB), wherein the spray protection devices (8) extend at least in sections laterally of the associated wheels (4) and wherein the projections (P) of the sections of the spray protection devices (8) extending laterally of the wheels (4) are arranged in a direction parallel to the axes of rotation of the associated wheels (4) on a plane (PE) intersecting the respectively associated wheel (4) and aligned parallel to the associated wheel (4) at least partially in front of and/or at least partially above the wheel (4), wherein the spray protection devices (8), viewed against the direction of travel (F), extend at most over half the width (B) of the at least one wheel (4) from the outside and wherein the spray protection devices (8) end completely behind a vertical plane (E1) in the direction of travel and that the vertical plane (E1) is arranged at a distance of 20% of the wheel diameter (RM) in front of the entire wheel (4)
**characterized in that**
the projections (P) of the sections of the spray protection devices (8) extending laterally from the wheels (4) in a direction parallel to the axes of rotation of the associated wheels (4) onto a plane (PE) intersecting the respective associated wheel (4) and aligned parallel to the associated wheel (4) are offset frontally in the direction of travel (F) from a vertical plane (E3) passing through the wheel center (RM) by less than 10% of the wheel diameter or the height (H) of the wheel (4).

2. Utility vehicle according to claim 1,
**characterized in that**
the spray protection devices (8) extend from the outside at most over a quarter of the width (B) of the at least one wheel (4), as viewed in the direction of travel (F), and that, preferably, the spray protection devices (8) extend exclusively to the side of the associated wheels (4).

3. Utility vehicle according to claim 2,
**characterized in that**
a region extending in the direction of travel (F) over 25 cm, preferably 50 cm, further preferably 75 cm, in particular 100 cm, in front of the entire wheel (4) associated to the respective spray protection device (8) and extending over the height (H) and the width (B) of the wheel (4) associated to the respective spray protection device (8) is at least substantially free of spray protection devices.

4. Utility vehicle according to one of claims 1 to 3,
**characterized in that**
the projections (P) of the portions of the spray protection devices (8) extending laterally of the wheels (4) in a direction parallel to the axes of rotation of the associated wheels (4) onto a plane (PE) intersecting the respectively associated wheel (4) and aligned parallel to the associated wheel (4) extend at least partially down to 95%, preferably down to 90%, further preferably down to 85%, in particular down to 80% of the height (H) of the associated wheel (4).

5. Utility vehicle according to one of claims 1 to 4,
**characterized in that**
the projections (P) of the sections of the spray protection devices (8) extending laterally of the wheels (4) are arranged in a direction parallel to the axes of rotation of the associated wheels (4) on a plane (PE) intersecting the respectively associated wheel (4) and aligned parallel to the associated wheel (4) at least partially above a reference line (RL) extending from the wheel center (RM) at an angle of 25°, preferably of 35°, in particular of 45° in the direction of travel (F) and that, preferably, the spray protection devices (8) extend at least up to the reference lines (RL).

6. Utility vehicle according to one of the claims 1,
**characterized in that**
the projections (P) of the portions of the spray protection devices (8) extending laterally of the wheels (4) in a direction parallel to the axes of rotation of the associated wheels (4) onto a plane (PM) intersecting the respectively associated wheel (4) and aligned parallel to the associated wheel (4) are spaced forwardly from a vertical plane (E3) through the wheel center (RM) by less than 5% of the wheel diameter or the height (H) of the wheel (4) in the direction of travel (F).

7. Utility vehicle according to one of the claims 1,
**characterized in that**
the spray protection devices (8) end entirely behind a vertical plane (E3) in the direction of travel and that the vertical plane (E3) is arranged at a distance of 10% of the wheel diameter (RM) in front of the entire wheel (4) and that, preferably, the spray protection devices (8) end entirely behind the front edge (4) of the respectively associated wheel (4) in the direction of travel (F).

8. Utility vehicle according to one of claims 1 to 7,
**characterized in that**
the spray protection devices (8) have a vertical extension of between 30 mm and 50 mm and/or between 45 mm and 65 mm and/or between 60 mm and 80 mm and/or between 75 mm and 100 mm at least in sections above the respective associated wheel (4), in particular at least substantially 60 mm.

9. Utility vehicle according to one of claims 1 to 8,
**characterized in that**
a loading floor structure (9) closed off to the outside by longitudinal profile structures (13) is provided, that the longitudinal profile structures (13) form lateral undercuts (14) at least in sections in the region above the wheel (4) with respect to the loading floor structure (9) and that, preferably, the undercuts (14) have a vertical extent of between 20 mm and 70 mm, preferably between 30 mm and 60 mm, in particular between 40 mm and 50 mm.

10. Utility vehicle according to any one of claims 1 to 9,
**characterized in that**
a loading floor structure (9) closed off to the outside by longitudinal profile structures (13) is provided, that the spray protection devices (8) are fixed to the associated longitudinal profile structures (13) and project downwards with respect to the longitudinal profile structures (13) and/or that the spray protection devices (8), in particular outside a mounting section (15) with the longitudinal profile structures (13), are at least substantially flat.

11. Utility vehicle according to one of claims 1 to 10,
**characterized in that**
the spray protection devices (8) are at least substantially triangular and/or have a downwardly pointing tip (16) and that, preferably, the tip (16) is provided at least substantially at the front end, in the direction of travel (F), of the respective spray protection devices (8).

12. Utility vehicle according to one of claims 1 to 11,
**characterized in that**
the one pair of wheels (4) is a front pair of wheels (4) in the direction of travel of several pairs of wheels (4, 5, 6) arranged one behind the other and that, preferably, the distance between the pairs of wheels (4, 5, 6) in the direction of travel (F) is less than 50 cm, preferably less than 35 cm, more preferably less than 25 cm, in particular less than 15 cm.

13. Utility vehicle according to any one of claims 1 to 12,
**characterized in that**
the wheels of the at least one pair of wheels respectively have twin tires.

## Revendications

1. Véhicule utilitaire (1), en particulier véhicule automobile, remorque ou semi-remorque, avec au moins une paire de roues (4), en particulier à l'avant dans la direction de déplacement (F), pour le déplacement du véhicule utilitaire (1) et avec au moins une paire de dispositifs anti-éclaboussures (8) associés à la au moins une paire de roues (4) pour réduire des embruns lors d'un passage sur une chaussée humide (FB), où les dispositifs anti-éclaboussures (8) s'étendent au moins par sections latéralement aux roues (4) associées et où les projections (P) des sections des dispositifs anti-éclaboussures (8) s'étendent latéralement aux roues (4) sont disposées dans une direction parallèle aux axes de rotation des roues (4) associées sur un plan (PE) coupant la roue (4) respectivement associée et orienté parallèlement à la roue (4) associée au moins partiellement devant et/ou au moins partiellement au-dessus de la roue (4), où les dispositifs anti-projections (8) s'étendent, vu dans le sens contraire à la direction de déplacement (F), depuis l'extérieur au maximum jusqu'à la moitié de la largeur (B) de la au moins une roue (4) et où les dispositifs anti-projections (8) se terminent entièrement derrière un plan vertical (El) et où le plan vertical (El) est disposé à une distance de 20 % du diamètre de roue (RM) devant la roue (4),
**caractérisé en ce que**
les projections (P) des sections des dispositifs anti-éclaboussures (8) s'étendant latéralement aux roues (4) dans une direction parallèle aux axes de rotation des roues (4) associées sur un plan (PM) coupant la roue (4) respectivement associée et orienté parallèlement à la roue (4) associée sont espacées vers l'avant d'un plan vertical (E3) passant par le centre de la roue (RM) de moins de 10% du diamètre de la roue ou de la hauteur (H) de la roue (4) dans la direction de déplacement (F).

2. Véhicule utilitaire selon la revendication 1,
**caractérisé en ce que**
les dispositifs anti-éclaboussures (8) s'étendent, vu dans le sens contraire à la direction de déplacement (F), de l'extérieur au maximum jusqu'à un quart de la largeur (B) d'au moins une roue (4) et que, de préférence, les dispositifs anti-éclaboussures (8) s'étendent exclusivement sur le côté des roues (4) correspondantes.

3. Véhicule utilitaire selon la revendication 2,
**caractérisé en ce que**
une zone s'étendant dans la direction de déplacement (F) sur 25 cm, de préférence sur 50 cm, de préférence encore sur 75 cm, en particulier sur 100 cm devant la roue entière (4) respectivement associée au dispositif anti-éclaboussures (8) et s'étendant jusqu'au-delà de la hauteur (H) et de la largeur (B) de la roue (4) respectivement associée au dispositif anti-éclaboussures (8) est au moins essentiellement exempte de dispositifs anti-éclaboussures.

4. Véhicule utilitaire selon l'une des revendications 1 à 3,
**caractérisé en ce que**
les projections (P) des sections des dispositifs anti-éclaboussures (8) s'étendant latéralement aux roues (4) dans une direction parallèle aux axes de rotation des roues associées (4) sur un plan (PE) coupant la roue respectivement associée (4) et orienté parallèlement à la roue associée (4) descendent au moins partiellement jusqu'à 95%, de préférence jusqu'à 90%, de préférence encore jusqu'à 85%, en particulier jusqu'à 80% de la hauteur (H) de la roue associée (4).

5. Véhicule utilitaire selon l'une des revendications 1 à 4,
**caractérisé en ce que**
les projections (P) des sections des dispositifs anti-éclaboussures (8) s'étendant latéralement aux roues (4) dans une direction parallèle aux axes de rotation des roues (4) correspondantes sur un plan (PE) coupant la roue (4) respectivement associée et orienté parallèlement à la roue (4) correspondante, au moins partiellement au-dessus d'une ligne de référence s'étendant depuis le centre de la roue (RM) selon un angle de 25°, de préférence de 35°, en particulier de 45° dans la direction de déplacement (F) vers l'avant et vers le haut, et **en ce que**, de préférence, les dispositifs anti-éclaboussures (8) s'étendent au moins jusqu'aux lignes de référence (RL).

6. Véhicule utilitaire selon l'une des revendications 1,
**caractérisé en ce que**
les projections (P) des sections des dispositifs anti-éclaboussures (8) s'étendant latéralement aux roues (4) dans une direction parallèle aux axes de rotation des roues (4) associées sur un plan (PM) coupant la roue (4) respectivement associée et orienté parallèlement à la roue (4) associée sont espacées vers l'avant d'un plan vertical (E3) passant par le centre de la roue (RM) de moins de 5% du diamètre de la roue ou de la hauteur (H) de la roue (4) dans la direction de déplacement (F).

7. Véhicule utilitaire selon l'une des revendications 1,
**caractérisé en ce que**
les dispositifs anti-éclaboussures (8) se terminent entièrement derrière un plan vertical (E3) dans la direction de déplacement et que le plan vertical (E3) est disposé à une distance de 10% du diamètre de la roue (RM) devant la roue entière (4) et que, de préférence, les dispositifs anti-éclaboussures (8) se terminent entièrement derrière le bord avant (4) de la roue (4) respectivement associée dans la direction de déplacement (F).

8. Véhicule utilitaire selon l'une des revendications 1 à 7,
**caractérisé en ce que**
les dispositifs anti-éclaboussures (8) ont, au moins par sections, au-dessus de la roue (4) correspondante, une extension verticale comprise entre 30 mm et 50 mm et/ou entre 45 mm et 65 mm et/ou entre 60 mm et 80 mm et/ou entre 75 mm et 100 mm, en particulier au moins essentiellement 60 mm.

9. Véhicule utilitaire selon l'une des revendications 1 à 8,
**caractérisé en ce que**
une structure de plancher de chargement (9) fermée vers l'extérieur par des structures profilées longitudinales (13) est prévue, que les structures profilées longitudinales (13) forment au moins par sections des contre-dépouilles latérales (14) dans la zone au-dessus de la roue (4) par rapport à la structure de plancher de chargement (9) et que, de préférence, les contre-dépouilles (14) ont au moins par sections une extension verticale comprise entre 20 mm et 70 mm, de préférence entre 30 mm et 60 mm, en particulier entre 40 mm et 50 mm.

10. Véhicule utilitaire selon l'une des revendications 1 à 9,
**caractérisé en ce que**
il est prévu une structure de plancher de chargement (9) fermée vers l'extérieur par des structures profilées longitudinales (13), **en ce que** les dispositifs anti-éclaboussures (8) sont fixés aux structures profilées longitudinales (13) correspondantes et font saillie vers le bas par rapport aux structures profilées longitudinales (13) et/ou que les dispositifs anti-éclaboussures (8) sont réalisés au moins essentiellement à plat, en particulier à l'extérieur d'une section de montage (15) avec les structures profilées longitudinales (13).

11. Véhicule utilitaire selon l'une des revendications 1 à 10,
**caractérisé en ce que**
les dispositifs anti-éclaboussures (8) sont au moins essentiellement triangulaires et/ou ont une pointe (16) dirigée vers le bas et que, de préférence, la pointe (16) est prévue au moins essentiellement à l'extrémité avant, dans la direction de déplacement (F), du dispositif anti-éclaboussures (8) respectif.

12. Véhicule utilitaire selon l'une des revendications 1 à 11,
**caractérisé en ce que**
la paire de roues (4) est une paire de roues (4) située à l'avant dans le sens de la marche parmi plusieurs paires de roues (4, 5, 6) disposées l'une derrière l'autre et que, de préférence, la distance entre les paires de roues (4, 5, 6) dans la direction de déplacement (F) est inférieure à 50 cm, de préférence inférieure à 35 cm, de préférence encore inférieure à 25 cm, en particulier inférieure à 15 cm.

13. Véhicule utilitaire selon l'une des revendications 1 à 12,
**caractérisé en ce que**
les roues de ladite au moins une paire de roues comportent respectivement des pneus jumelés.
